(19) Europäisches Patentamt
European Patent Office
Office européen des brevets

(11) EP 2 884 850 B1

(12) **EUROPEAN PATENT SPECIFICATION**

(45) Date of publication and mention
of the grant of the patent:
**21.02.2018 Bulletin 2018/08**

(21) Application number: **13747830.1**

(22) Date of filing: **06.08.2013**

(51) Int Cl.:
***A23G 9/38*** *(2006.01)*

(86) International application number:
**PCT/EP2013/066493**

(87) International publication number:
**WO 2014/026885 (20.02.2014 Gazette 2014/08)**

(54) **STABILIZED AERATED FROZEN CONFECTION CONTAINING HYDROPHOBIN**

STABILISIERTE, GEFRORENE UND DURCHLÜFTETE SÜSSWARE MIT HYDROPHOBIN

CONFISERIE CONGELÉE GONFLÉE STABILISÉE CONTENANT DE L'HYDROPHOBINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.08.2012 US 201213585257**

(43) Date of publication of application:
**24.06.2015 Bulletin 2015/26**

(73) Proprietors:
• **Unilever PLC
London, Greater London EC4Y 0DY (GB)**
Designated Contracting States:
**CY GB IE MT**
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventors:
• **COX, Andrew, Richard
Bedford
Bedfordshire MK44 1LQ (GB)**
• **HEDGES, Nicholas, David
Bedford
Bedfordshire MK44 1LQ (GB)**
• **ROSSETTI, Damiano
Bedford
Bedfordshire MK44 1LQ (GB)**
• **KRISTENSEN, Jakob, Broberg
DK-8870 Langa (DK)**

(74) Representative: **van Benthum, Wilhelmus A. J.
Unilever PLC
Unilever Patent Group
Colworth House
Sharnbrook
Bedford, Bedfordshire MK44 1LQ (GB)**

(56) References cited:
**EP-A1- 1 800 543       EP-A1- 1 938 697
WO-A1-2007/087967    WO-A1-2007/087968
WO-A1-2009/065415    US-A1- 2006 024 417**

EP 2 884 850 B1

**Description**

BACKGROUND OF THE INVENTION

Field of the Invention

The present invention relates to the production of an aerated frozen confectionery comprising of hydrophobin, a Secondary protein, and a Co-surfactant (CSF).

Background of the Art

It is desirable to make small size bubbles in aerated frozen confections that are stable to temperature abuse in order to improve texture, palatability, and reduce caloric content. It is well understood that frozen confections such as sorbets, sherbets and ice cream experience temperature fluctuations in the distribution chain and in consumers' home freezers. This results in bubble growth and a degradation of the product quality and the palatability on consumption. It is preferable to produce an ice cream with stable bubbles.

US Patent publication no. 2006024417A, published on February 2, 2006 to Berry et al. discloses aerated products comprising hydrophobin where the hydrophobin is used to inhibit bubble coarsening.

US Patent publication no. 2008213453A published on September 4, 2008 to Burmester et al. discloses aerated food products and methods producing them, where in the product comprises hydrophobin and a surfactant.

EP 1 800 543 A1 relates to frozen aerated confections, in particular to frozen aerated confections comprising hydrophobin and ice structuring protein.

WO 2009/065415 A1 relates to novel polypeptides comprising an ice-binding capability resulting in an ice crystal formation and/or growth reducing or inhibiting activity.

EP 1 938 697 A1 relates to aerated food products containing hydrophobin and methods for producing them.

We have unexpectedly found that when the combination of hydrophobin, at least one Secondary protein and at least one Co-surfactant (as those terms are defined below) are used to make an aerated frozen confectionery product then:

- The microstructure of the freshly produced product is preferable since the air bubbles sizes are generally smaller augmenting the beneficial qualities described above.
- The microstructure of the product after storage and temperature abuse is preferable since the air bubbles sizes are more stable and do not grow (coarsen) to the same extent as comparative cases.

BRIEF DESCRIPTION OF THE INVENTION

In one aspect of the invention is a frozen aerated food composition including but not limited to:

a. at least 0.01wt. % of total hydrophobin(s) selected from the group consisting of class I hydrophobin(s), class II hydrophobin(s) or blends thereof added in isolated form to the food composition;

b. one or more Co-surfactants in the total concentration range of 0.001 to less than about 0.3 wt. %, preferably less than about 0.1 or 0.2 wt. %, wherein the one or more Co-surfactants are ingredients which, when mixed in an aqueous solution containing 0.001 wt. % hydrophobin and between 0.0015 and 0.2 wt. % of at least one non-hydrophobin (Secondary) protein at a concentration effective to confer an air/water surface dilatational elasticity that is at least 30% of that of 0.001 wt. % pure hydrophobin (absent the Co-surfactant), measured between 600 and 4000s at 5°C for an air droplet in water subject to a continuous area change of between 2.5 and 3.5% oscillated at a frequency of 0.05 Hz, using the procedure as described in here; and wherein the weight ratio of Co-surfactant(s) to total hydrophobin(s) is in the range of 0.02 to less than 1.0. preferably the Co-surfactant to hydrophobin wt. ratio is at least about 0.05, more preferably at least about 0.3 and preferably at most about 0.75; and

c. one or more Secondary protein(s) that are different from hydrophobin(s); wherein said Secondary protein(s) are present in a total concentration range of 0.25 to less than 6.0 wt. %, preferably the total Secondary protein(s) are at least 0.5 or 1.0 wt. % and at most 4 or 5 wt. %; wherein the one or more Secondary protein(s) are defined as non-hydrophobin proteins that when mixed with 0.001 wt. % hydrophobin in aqueous solution at a concentration of 0.04 wt. % results in an air/water surface dilatational elasticity that is at least 35% less than that of hydrophobin alone, where the dilatational measurement is made between 600 and 4000s at 5°C for an air droplet in water subject to a continuous area change of between 2.5 and 3.5% oscillated at a frequency of 0.05Hz, using the procedure as described in here.

In another aspect of the invention is a process of making an aerated food composition including but not limited to the steps of:

a. Blending the food composition ingredients together, mixing, and pasteurising; wherein the blend comprises secondary protein(s) in a total concentration range of 0.25 to less than 6.0 wt. %, based on the frozen product; and wherein the one or more Secondary protein(s) are defined as non-hydrophobin proteins that when mixed with 0.001 wt. % hydrophobin in aqueous solution at a concentration of 0.04 wt. % results in an air/water surface dilatational elasticity that is at least 35% less than that of hydrophobin alone, where the dilatational measurement is made between 600 and 4000s at 5°C for an air droplet in water subject to a continuous area change of between 2.5 and 3.5% oscillated at a frequency of 0.05Hz, using the procedure as described in here

b. Adding at least 0.01 wt. % of total hydrophobin(s) selected from the group consisting of class I hydrophobin(s), class II hydrophobin(s) or blends thereof and a Co-surfactant or Co-surfactants in the total concentration range of 0.001 to less than 0.3 wt. % to the chilled mix of step (a);
wherein the one or more Co-surfactants are ingredients which, when mixed in an aqueous solution containing 0.001 wt. % hydrophobin and between 0.0015 and 0.2 wt. % of at least one non-hydrophobin (Secondary) protein at a concentration effective to confer an air/water surface dilatational elasticity that is at least 30% of that of 0.001 wt. % pure hydrophobin (absent the Co-surfactant), measured between 600 and 4000s at 5°C for an air droplet in water subject to a continuous area change of between 2.5 and 3.5% oscillated at a frequency of 0.05 Hz, using the procedure as described in here;

c. Aerating and freezing the mix of step (b) to produce the aerated and frozen product; and

d. Cooling the frozen product to a storage temperature of less than -15°C, and wherein the weight ratio of Co-surfactants to total hydrophobin(s) is in the range of 0.02 to less than 1.0.

BRIEF DESCRIPTION OF THE DRAWINGS

Figure 1 is a graphical representation of Elastic modulus for Example 1, samples A) HFBII, (B) HFBII+SMP and (C) HFBII+SMP+CSF (TWN20) at 5°C as a function of time.

Figure 2 depicts SEM images for Example 1, HFBII (a, d), HFBII+SMP (b, e) and HFBII+SMP+CSF (TWN20) (c, f) for ice cream formulations described in Table 2. Images show fresh samples (a to c) and after the storage test (d to f), which includes the standard temperature abuse protocol.

Figure 3 depicts SEM images of comparative samples containing 0.02 wt. % Tween 60 (a, d), 0.02 wt. % Erythritol (b, e), and 0.03 wt. % Hygel (c, f). All samples include HFBII (0.2 wt. %) + SMP (8.22 wt. %) + comparative surfactant at concentration indicated. Images show fresh samples (a to c) and after the storage test (d to f), which includes the standard temperature abuse protocol. Samples correspond to equivalent model formulations described in Table 3.

Figure 4 depicts SEM images of inventive samples containing 0.02 wt. % Tween 20 (a, d), 0.06 wt. % Tween 60 (b, e), and 0.02 wt. % PGE-O-80 (c, f). All samples include HFBII (0.2 wt. %) + SMP (8.22 wt. %) + inventive surfactant at concentration indicated. Images show fresh samples (a to c) and after the storage test (d to f), which includes the standard temperature abuse protocol. Samples correspond to equivalent model formulations described in Table 3.

Figure 5: is a graphical representation of Elastic modulus for HFBI class II, HFBI class II+SMP and HFBI class II+SMP+CSF (TWN20) at 5°C for indicated concentrations as a function of time.

Figure 6: is a graphical representation of Elastic modulus for CU class II, CU class II+SMP and CU class II+SMP+CSF (TWN20) at 5°C for indicated concentrations as a function of time.

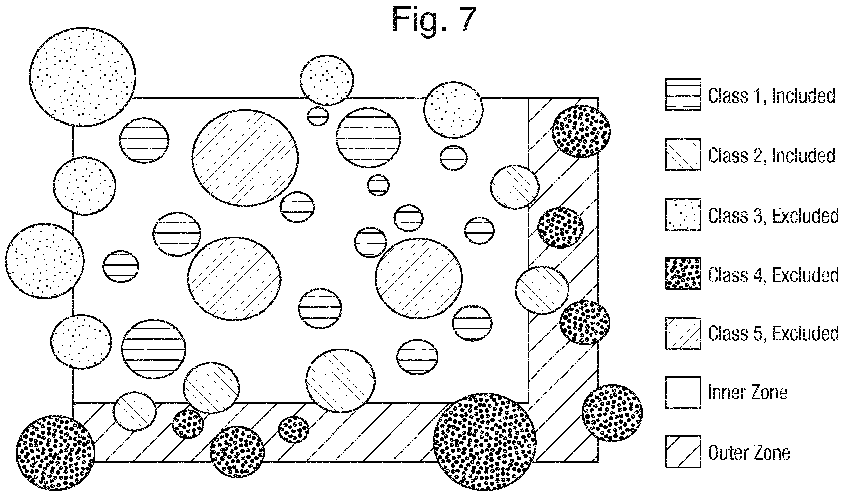

Figure 7 shows a schematic depiction of a micrograph illustrating the guard frame concept for bubble size measurement.

DETAILED DESCRIPTION OF THE INVENTION

In one aspect of the invention is a frozen aerated food composition including but not limited to:

a. at least 0.01wt. % of total hydrophobin(s) selected from the group consisting of class I hydrophobin(s), class II hydrophobin(s) or blends thereof added in isolated form to the food composition;

b. one or more Co-surfactants in the total concentration range of 0.001 to less than 0.3 wt. %, preferably less than about 0.1 or 0.2 wt. %,
wherein the one or more Co-surfactants are ingredients which when mixed in an aqueous solution containing 0.001 wt. % hydrophobin and between 0.0015 and 0.2 wt. % of at least one non-hydrophobin (Secondary) protein at a concentration effective to confer an air/water surface dilatational elasticity that is at least 30% of that of 0.001 wt. % pure hydrophobin (absent the Co-surfactant), measured between 600 and 4000s at 5°C for an air droplet in water subject to a continuous area change of between 2.5 and 3.5% oscillated at a frequency of 0.05 Hz, using the procedure as described in here;
and wherein the weight ratio of Co-surfactant(s) to total hydrophobin(s) is in the range of 0.02 to less than 1.0. preferably the Co-surfactant to hydrophobin wt. ratio is at least about 0.05, more preferably at least about 0.3 and preferably at most about 0.75; and

c. one or more Secondary protein(s) that are different from hydrophobin(s); wherein said Secondary protein(s) are present in a total concentration range of 0.25 to less than 6.0 wt. %, preferably the total Secondary protein(s) are at least 0.5 or 1.0 wt. % and at most 4 or 5 wt. %;
wherein the one or more Secondary protein(s) are defined as non-hydrophobin proteins that when mixed with 0.001 wt. % hydrophobin in aqueous solution at a concentration of 0.04 wt. % results in an air/water surface dilatational elasticity that is at least 35% less than that of hydrophobin alone, where the dilatational measurement is made between 600 and 4000s at 5°C for an air droplet in water subject to a continuous area change of between 2.5 and 3.5% oscillated at a frequency of 0.05Hz, using the procedure as described in here.

Advantageously the total hydrophobin(s) concentration is at most 1.5 wt. %. Preferably the Co-surfactants is or are water soluble non-ionic surfactant(s). More preferably the Co-surfactant(s) are selected from Polysorbates, polyglycerol esters of alkyl or alkenyl fatty acids, diacetyl tartartic acid esters of mono-/di- glycerides, sucrose esters with an HLB > about 8 or blends thereof. Most preferably the Co-surfactant(s) has a minimum effective HLB value of about 8. Effective HLB value is here defined as the arithmetic mean of the HLB values of a blend of Co-surfactants. Advantageously the Co-surfactant(s) is selected from Tweens 20, 60 or 80, PGE-O-80; Panodan-Visco Lo 2000 and blends thereof.

Preferably the average bubble diameter (d3,2) is at least 10 % smaller after the standard temperature abuse protocol described below than the same product prepared the same way but absent either hydrophobin(s), Co-surfactant(s) or if both are present then outside the total Co-surfactant(s) to hydrophobin(s) ratio range of 0.02 to less than 1.0. Preferably the average bubble size is at least 20, 30, 40 or 50 % smaller.

Preferably the average bubble diameter d(3,2) of the freshly prepared frozen product stored at below about -15°C and pre-temperature abuse is at least 10% smaller, preferably 15% smaller, and more preferably 20% smaller than the same product prepared the same way but absent either hydrophobin(s), Co-surfactant(s) or if both are present then outside the total Co-surfactant(s) to hydrophobin(s) ratio range of about 0.02 to less than 1.0.

In another aspect of the invention is a process of making an aerated food composition including but not limited to the steps of:

a. Blending the food composition ingredients together, mixing, and pasteurising; wherein the blend comprises secondary protein(s) in a total concentration range of 0.25 to less than 6.0 wt. %, based on the frozen product; and wherein the one or more Secondary protein(s) are defined as non-hydrophobin proteins that when mixed with 0.001 wt. % hydrophobin in aqueous solution at a concentration of 0.04 wt. % results in an air/water surface dilatational elasticity that is at least 35% less than that of hydrophobin alone, where the dilatational measurement is made between 600 and 4000s at 5°C for an air droplet in water subject to a continuous area change of between 2.5 and 3.5% oscillated at a frequency of 0.05Hz, using the procedure as described in here;
b. Adding at least 0.01 wt. % of total hydrophobin(s) selected from the group consisting of class I hydrophobin(s), class II hydrophobin(s) or blends thereof and a Co-surfactant or Co-surfactants in the total concentration range of 0.001 to less than 0.3 wt. % to the chilled mix of step (a);
wherein the one or more Co-surfactants are ingredients which, when mixed in an aqueous solution containing 0.001 wt. % hydrophobin and between 0.0015 and 0.2 wt. % of at least one non-hydrophobin (Secondary) protein at a concentration effective to confer an air/water surface dilatational elasticity that is at least 30% of that of 0.001 wt. % pure hydrophobin (absent the Co-surfactant), measured between 600 and 4000s at 5°C for an air droplet in water subject to a continuous area change of between 2.5 and 3.5% oscillated at a frequency of 0.05 Hz, using the procedure as described in here;

    c. Aerating and freezing the mix of step (b) to produce the aerated and frozen product; and

    d. Cooling the frozen product to a storage temperature of less than -15°C, and wherein the weight ratio of Co-surfactants to total hydrophobin(s) is in the range of 0.02 to less than 1.0.

Preferably the process further includes the step of extruding the frozen product from a freezer at a temperature of about -5 °C or less.

All percentages, unless otherwise stated, refer to the percentage by weight, with the exception of percentages cited in relation to the overrun.

Frozen confections

The term "frozen confection" means an edible confection made by freezing a mix of ingredients which includes water. Frozen confections typically contain fat, non-fat milk solids and sugars, together with other minor ingredients such as stabilisers, emulsifiers, colours and flavourings. Frozen confections include ice cream, water ice, frozen yoghurt, sherbets, sorbet and the like.

Aeration

The term aeration means that gas has been incorporated into a product to form air cells. The gas can be any gas but is preferably, particularly in the context of food products, a food-grade gas such as air, nitrogen or carbon dioxide or a mixture of the aforementioned. The extent of the aeration can be measured in terms of the volume of the aerated product. The stability of the aeration can be assessed by monitoring the volume of the aerated product over time and or the bubble size change over time.

Microstructure

The microstructure of frozen confections is critical to their organoleptic properties. The air cells incorporated into frozen confections are preferably small in size which ensures that the frozen confections do not have a coarse texture and also ensures that they deliver a smooth creamy mouth-feel. In typical ice cream products, the air bubbles coarsen over time (through distribution and storage) leading to a degradation in quality.

Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$$X_n\text{-C-}X_{5\text{-}9}\text{-C-C-}X_{11\text{-}39}\text{-C-}X_{8\text{-}23}\text{-C-}X_{5\text{-}9}\text{-C-C-}X_{6\text{-}18}\text{-C-}X_m \text{ (SEQ ID No. 1)}$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-C-}X_{1\text{-}50}\text{-C-}X_{0\text{-}5}\text{-C-}X_{1\text{-}100}\text{-C-}X_{1\text{-}100}\text{-C-}X_{1\text{-}50}\text{-C-}X_{0\text{-}5}\text{-C-}X_{1\text{-}50}\text{-C-}X_m \text{ (SEQ ID No. 2)}$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, • - helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m+n <100 or 200 . The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as Actinomycete and Steptomyces sp. (WO01/74864). These bacterial proteins, by contrast to fungal hydrophobins, form only up to one disulphide bridge since they have only two cysteine residues. Such proteins are an example of functional equivalents to hydrophobins having the conserved sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as Cryphonectria parasitica which secretes a hydrophobin termed cryparin (MacCabe and Van Alfen, 1999, App. Environ. Microbiol. 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in Agaricus bisporus; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera Saccharomyces, Kluyveromyces, Pichia, Hansenula, Candida, Schizo saccharomyces and the like, and filamentous species such as (but not limited to) those of the genera Aspergillus, Trichoderma, Mucor, Neurospora, Fusarium and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

The hydrophobin(s) used in the present invention is selected from the group consisting of class I hydrophobin(s), class II hydrophobin(s) or blends thereof. Preferably, the hydrophobin used is a Class II hydrophobin. Most preferably, the hydrophobin used is HFBI, HFBII, or CU (cerato ulmin). The hydrophobin used can also be a mixture of hydrophobins, e.g. Class II hydrophobins HFBI and HFBII.

The product should comprise at least 0.01 wt. % hydrophobin, more preferably at least 0.025 wt. % hydrophobin and most preferably at least 0.05 wt. %. Preferably the hydrophobin is present in an amount of 1.5 wt. % maximum and more preferably 0.5 wt. % maximum and most preferably 0.2 wt. % maximum.

Overrun

The extent of aeration of a product is measured in terms of "overrun", which is defined as:

$$\% \ Overrun = \frac{weight\ of\ mix - weight\ of\ aerated\ product}{weight\ of\ aerated\ product} \times 100$$

Where the weights refer to a fixed volume of mix or product. Overrun is measured at atmospheric pressure.

Preferably the overrun of the product is between 10 and 400% overrun, more preferably between 10 and 300% overrun, and most preferably between 20 and 250% overrun. Preferably the measurements are taken immediately after aeration is ended.

Dilational Interfacial Rheology

Interfacial or surface rheology, defines the functional relationship between stress, deformation and rate of deformation at an interface in terms of coefficients of elasticity, and viscosity, arising from relaxation processes. The technique is referred to as *dilational* interfacial rheology when the experimentally imposed interfacial deformation arises from variation of area at constant shape. The investigation of the dilational rheology of adsorbed layers is useful to access the macroscopic viscoelastic properties of interfaces and can be used to predict the stability of a foam once formed.

In the dilational deformation mode, the use of the interfacial tension (y) response to relative area variation (ΔA/A) provides for the definition of the dilational viscoelasticity. Assuming harmonic area perturbations of small amplitude of frequency v, the dilational viscoelasticity can be written using a linear approximation approach, as

$$E = \frac{d\gamma}{d \ln A}$$

where the viscoelastic modulus E can be further split into its elastic and viscous components (see e.g. R. Miller, L. Liggieri, Interfacial Rheology, Brill, Leiden, 2009, Ch.5, 138).

One criterion to reduce bubble coarsening (e.g. coalescence and/or disproportionation) is to confer adequate interfacial properties (particularly elasticity) to the air/water surface, i.e. the bubble surface. Experimental data show that high interfacial elasticity (for completely "elastic" interfaces) is able to slow down the rate of disproportionation (see e.g. W. Kloek, T. van Vliet, M. Meinders, J Colloi Interf Sci, 2001, 237, 158), and consequently this bubble/foam coarsening.

This criterion has been used here to predict the stability of fully formulated aerated frozen confections such as ice creams , stored under controlled thermal conditions, which includes a temperature abuse protocol. Verification of the stability of the ice cream was assessed using SEM (Scanning Electron Microscopy) and observations compared with predictions from the dilational interfacial rheology experiments.

Co-surfactants

A Co-surfactant (CSF) is defined as:

An ingredient which, when mixed in an aqueous solution containing:

0.001 wt. % hydrophobin

and between 0.0015 and 0.2 wt. % of at least one non-hydrophobin (Secondary) protein at a concentration effective to confer an air/water surface dilatational elasticity that is at least 30% of that of 0.001 wt. % pure hydrophobin (absent the Co-surfactant), more preferably at least 50%, more preferably at least 55%, more preferably at least 65% and most preferably at least 70%, measured between 600 and 4000s at 5°C for an air droplet in water subject to a continuous area change of between 2.5 and 3.5% oscillated at a frequency of 0.05 Hz using the procedure provided below. The effective concentration will depend on the identity of the Co-surfactant. Preferably the effective concentration will be in the range of 0.001 to less than 0.2 wt. % based on the product; more preferably in the range of 0.005 to 0.2 wt. % and most preferably in the range of 0.01 to 0.1 wt. %.

Preferably the Co-surfactant is chosen as one of more of the following:

- E.g. Polysorbates, including Polysorbate 20, 60 and/or 80 also known as Tween 20, 60, and 80 or Polyoxyethylene (20) sorbitan monolaurate, Polyoxyethylene (60) sorbitan monolaurate and Polyoxyethylene (80) sorbitan monolaurate respectively.
- Polyglycerol esters of fatty acids, particularly PGE-O-80 as supplied by Danisco

- Diacetyl tartartic acid esters of mono-/di- glycerides, particularly Panodan Visco-Lo 2000as supplied by Danisco
- Sucrose esters of HLB > 8 or 12 (HLBs of SP70 and SE1670 are 15 and 16, respectively)

Secondary protein(s)

Secondary protein(s) are defined as non-hydrophobin proteins that when mixed with 0.001 wt. % hydrophobin in aqueous solution at a concentration of 0.04 wt. % results in an air/water surface dilatational elasticity that is at least 35% less than that of hydrophobin alone, more preferably at least 40% less, more preferably at least 50% less, where the dilatational measurement is made between 600 and 4000s at 5°C for an air droplet in water subject to a continuous area change of between 2.5 and 3.5% oscillated at a frequency of 0.05Hz. Secondary proteins, are advantageously chosen from food proteins such as: skim milk protein (SMP), whey protein, soy protein, or mixtures thereof and the like.
It may be noted that many Secondary proteins such as skim milk powder are not typically received and used as pure proteins, since they consist of other ingredients such as lactose and other non-protein materials. Therefore the protein content must be taken into account during formulation.

Other Product Ingredients

Further additional ingredients are typically added to make the frozen confectionary product. These include and are not restricted to:

Sugars, e.g. sucrose, fructose, dextrose, corn syrups and sugar alcohols and the like. Fats, e.g. coconut oil, butter oil, palm oil and the like. Preferably the fat content of the product is less than 5 wt. %, more preferably less than 3 wt. %, more preferably less than 2 wt. %, most preferably less than 1.5 wt. %, 1.0, 0.5, 0.4, 0.3, 0.2, 0.1, 0.01, 0.001 wt. % or zero.

Emulsifiers, e.g. mono/di glycerides of fatty acids and the like other than Co-surfactants.
Stabilisers or thickeners, e.g. locust bean gum, guar gum, tara gum, carrageenans, alginates, pectins, citrus fibres, xanthan, gelatine and the like.
Flavours and colours, e.g. vanilla, fruit purees, chocolate, mint and the like.
The invention will now be described in greater detail by way of the following non-limiting examples. The examples are for illustrative purposes only and not intended to limit the invention in any way. Physical test methods are described below:

Except in the operating and comparative examples, or where otherwise explicitly indicated, all numbers in this description indicating amounts or ratios of materials or conditions or reaction, physical properties of materials and/or use are to be understood as modified by the word "about".

Where used in the specification, the term "comprising" is intended to include the presence of stated features, integers, steps, components, but not to preclude the presence or addition of one or more features, integers, steps, components or groups thereof.
All percentages in the specification and examples are intended to be by weight unless stated otherwise

Examples:

Example 1: Surface dilatational rheology measurements to demonstrate the effect of one inventive Co-surfactant

Surface dilatational rheology measurements were taken using formulations A, B, and C shown in Table 1.

Table 1: Formulations used for example 1. * Concentration for SMP (skim milk powder) is that stated for the total powder. The amount of protein in SMP was stated by the manufacturer as 35 wt. %.

| wt. % | | | |
|---|---|---|---|
| Ingredient | A (reference) | B (comparative) | C (inventive) |
| HFBII | 0.001% | 0.001% | 0.001% |
| SMP * | - | 0.041% | 0.041% |
| Co-surfactant Tween 20 | - | - | 0.0001% |

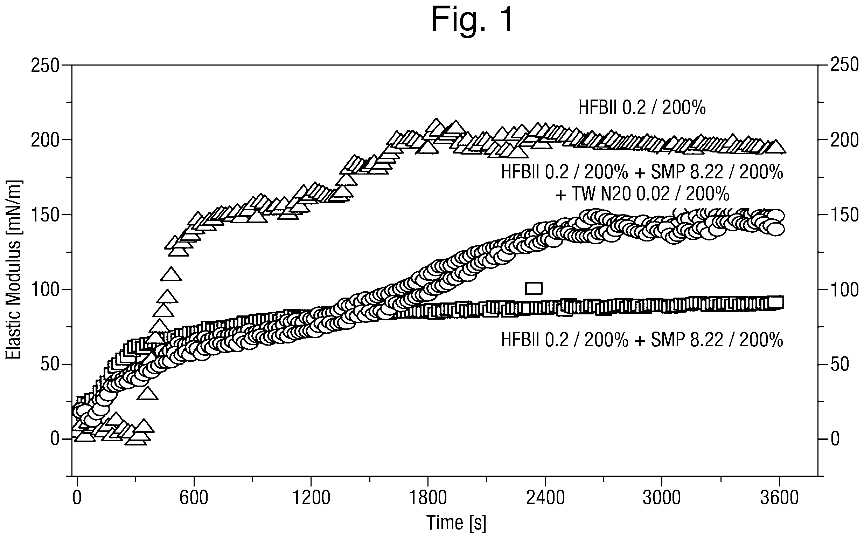

The elastic modulus data are summarised in Figure 1. We can appreciate the unexpectedly different effects of adding SMP or SMP + Co-surfactant (Tween20) to HFBII at the indicated concentrations. Addition of SMP (squares, Example 1B) clearly reduces the elastic interfacial modulus of HFBII (triangles, Example 1A). Addition of Co-surfactant (circles Example 1C) to the SMP + HFBII mix promotes a recovery of the interfacial elasticity that is substantially different than the comparative case i.e. HFBII + SMP.

This recovery is preferred since it will lead to a more stable foam structure in an aerated frozen confectionery where the ratio of HFBII : Co-surfactant : SMP is similar to that described in this example, although the absolute concentrations will be greater in order to make the food product.

Example 2: Aerated Frozen Products

Frozen aerated (ice cream) products (A), (B), and (C) were made using formulations summarised in Table 2. The relative amounts of hydrophobin, SMP, and Tween 20 Co-surfactant are the same as the equivalent examples measured in Example 1 (A, B, C).

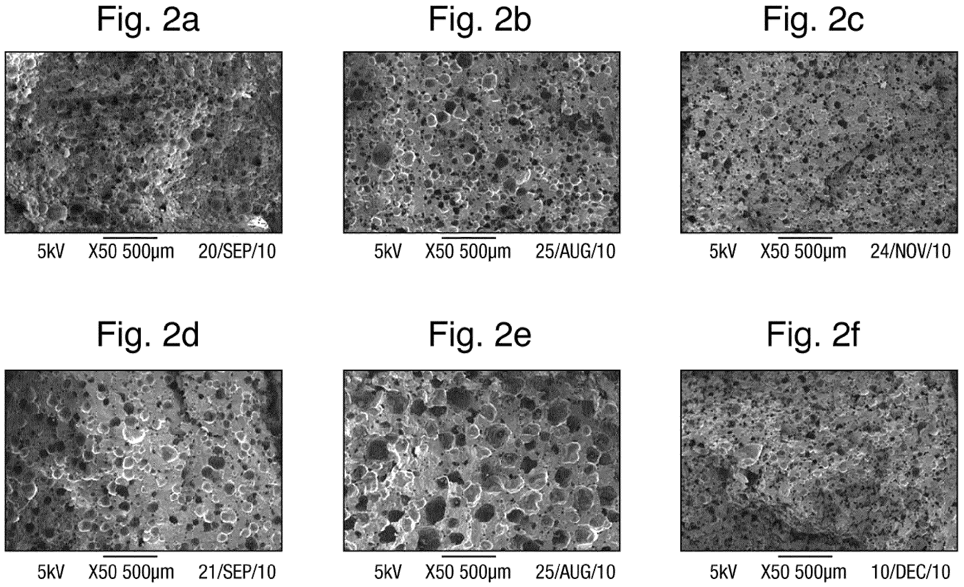

Table 2: Formulation of ice cream for SEM images shown in Figure 2.

| Wt. % | | | |
|---|---|---|---|
| Ingredients | A | B | C |
| Sucrose | 11.5% | 11.5% | 11.5% |
| Corn syrup | 10.0% | 10.0% | 10.0% |
| Locust Bean Gum | 0.3% | 0.3% | 0.3% |
| Guar Gum | 0.1% | - | - |
| SMP | - | 8.22% | 8.22% |
| Water | 67.9% | 69.78% | 69.76% |
| post addition | | | |
| HFBII | 0.2% | 0.2% | 0.2% |
| Co-surfactant Tween 20 | - | - | 0.02% |

The microstructures of the fresh and temperature abused products for A, B, and C, are shown in the SEM images depicted in Figure 2. From these images it can be seen that: Product B (Figure 2b) has a larger air bubble size (diameter) distribution than A (Figure 2a) or C (Figure 2c) for the freshly prepared sample. Product B bubbles (Figure 2e) also coarsen (or grow) more than A (Figure 2d) or C (Figure 2f) after temperature abuse using the method described below. Hence, after temperature abuse, Product B has the poorest microstructure. Further assessment of the microstructure via quantifying the bubble size changes between the fresh and the temperature abused samples can be determined by, for example, image analysis of the SEM micrographs as discussed below.

Inventive Product C with added Co-surfactant has the smallest air bubbles for the fresh sample (Figure 2c). It also unexpectedly had the smallest air bubbles after temperature abuse (Figure 2f).

It was found that the recovery of the elastic modulus for the inventive Co-surfactant containing solution (Example 1 C) was associated with the improved microstructure and stability of the formed ice cream (Example 2 C), as observed from SEM images shown in Figure 2f.

Example 3: Surface dilatational modulus for a range of hydrophobin, skim milk protein, and Co-surfactant comparative and inventive cases.

Evaluating the extent of the recovery (if any) of the elastic modulus ($E_{el}$) in presence of a Co-surfactant over the comparative hydrophobin + SMP case (e.g. Example 1B) is a method that was found useful to predict the quality of the ice cream microstructure after the temperature abuse storage test.

The elasticity of the a/w (air/water) interface in presence or absence of a Co-surfactant can be listed at set time points (e.g. 1200s, 1800s, 2400s, 3600s) and compared with the elasticity (absolute and percentage) of reference hydrophobin example alone (measured at 3600s).

Elasticity of HFBII (0.001 wt. %) measured after 3600s is 212.9±19.4 mN/m (average of five repetitions) - referring to solution in Example 1A, and illustrated in Figure 1.

Table 3: Elastic modulus (mN/m) compared at defined time points for HFBII(0.001 wt. %) + SMP(0.0411 wt. %) + either inventive Co-surfactant or a comparative surfactant (at indicated concentration). Parenthetical expressions indicate percentage (%) of HFBII(0.001 wt. %) elastic modulus (219 mN/m = 100%) measured at 3600s

| Inventive Co-surfactant or comparative surfactant (wt. %) | 1200s | 1800s | 2400s | 3600s | replicates | Notes |
|---|---|---|---|---|---|---|
| NONE (Comp.) | 84.3 (39.6%) | 87.0 (40.08% ) | 90.2 (42.3%) | 93.6 (43.9%) | 2 | |
| Tween 20 (Inv.) (0.00005 wt. %) | 76.8 (36.0%) | 86.9 (40.8%) | 104.6 (49.1%) | 138.8 (65.2%) | 3 | |
| Tween 20 (Inv.) | 72.2 (33.9%) | 97.4 (45.7%) | 127.4 (59.8%) | 139.0 (65.2%) | 4 | |
| (0.0001 wt. %) | | | | | | |
| Tween 20(Inv.) (0.00015 wt. %) | 91.2 (42.8%) | 89.3 (41.9%) | 113.6 (53.3%) | 146.5 (68.8%) | 2 | |
| Tween 60(Comp.) (0.0001 wt. %) | 63.5 (29.8%) | 71.2 (33.4%) | 78.1 (36.6%) | 90.2 (42.3%) | 1 | |
| Tween 60(Comp.) (0.0002 wt. %) | 75.3 (35.4%) | 92.0 (43.2%) | 99.6 (46.8%) | 114.9 (54%) | 2 | |
| Tween 60(Inv.) (0.0003%) | 82.1 (38.5%) | 108.2 (50.8%) | 123.2 (57.8%) | | 2 | exp terminated at 2400s |
| Tween 80(Inv.) (0.0001%) | 68.9 (32.3%) | 80.1 (37.6%) | 98.7 (46.3%) | 124.1 (58.3%) | 3 | |
| PGE-O-80 (Inv.) (0.0001 wt. %) Poly-glycerol Ester | *119.5 (56.1%) | | | | 1 | exp terminated at *900s |
| PGE-O-80 (Inv.) (0.00005 wt.%) Poly-glycerol Ester | 114.5 (53.8%) | 126.3 (59.3%) | 121.1 (56.9%) | | 1 | exp terminated at 2400s |
| Panodan Visco Lo 2000 (Inv.) (0.0002 wt. %) | 25.7 (14.31%) | 56.5 (31.47%) | 95.8 (53.36%) | 148.7 (82.8%) | 1 | |
| Sucrose Ester SE1670 (Inv.) (0.0002 wt. %) | 60.5 (28.4%) | 109.1 (51.2%) | 129.2 (60.7%) | 152.4 (71.6%) | 1 | |
| Sucrose Ester SE1670 (Inv.) (0.0001 wt. %) | 59.7 (28.0%) | 71.3 (33.5%) | 83(39%) | 124.7 (58.6%) | 2 | |
| Sucrose Ester SP70 (Comp.) (0.0001 wt. %) | 57.9 (27.2%) | 62.7 (29.5%) | 72.8 (34.2%) | 102.4(48.1 %) | 2 | |
| Erythritol (Comp.) (0.0001 wt. %) | 80.5 (37.8%) | 85.7 (40.2%) | 89.2 (41.8%) | 94.9 (44.5%) | 1 | |
| PGE55 (Comp.) | 61.1 (28.7%) | 65.5 (30.7%) | 67.3 (31.6%) | 75.8 (35.6%) | 2 | |
| (0.0001 wt. %) | | | | | | |
| Hygel (Comp.) (0.00015 wt. %) | 74.8 (35.1%) | 79.0 (37.1%) | 79.9 (37.5%) | 81.1 (38.0%) | 1 | |

Example 4: Aerated Frozen Products

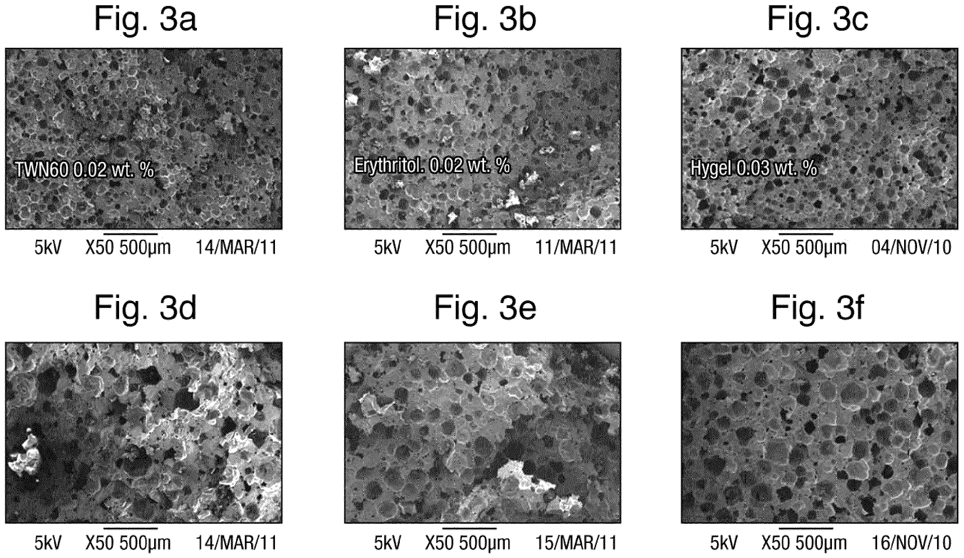

Aerated frozen products were produced using different examples of Co-surfactants. SEM images illustrated in Figure 3 were produced for both fresh (Figure 3a, b, c) and temperature abused samples (Figure 3d, e, f). HFBII concentration was 0.2 wt. % and SMP concentration was 8.22 wt. %.

In all the comparative cases, after the temperature abuse protocol, the microstructure was observed to degrade (air bubbles visibly coarsened), as is also seen in the case when an inventive Co-surfactant is not present in the formulation (Example 2B and Example in Figure 2e) '. This observation was surprisingly found to mirror the trend of the interfacial elastic modulus from interfacial rheology experiments on model formulations. In all cases, in fact, the elastic modulus (Table 3) stays at all time points below 45% of the value for HFBII alone (measured at 3600s).

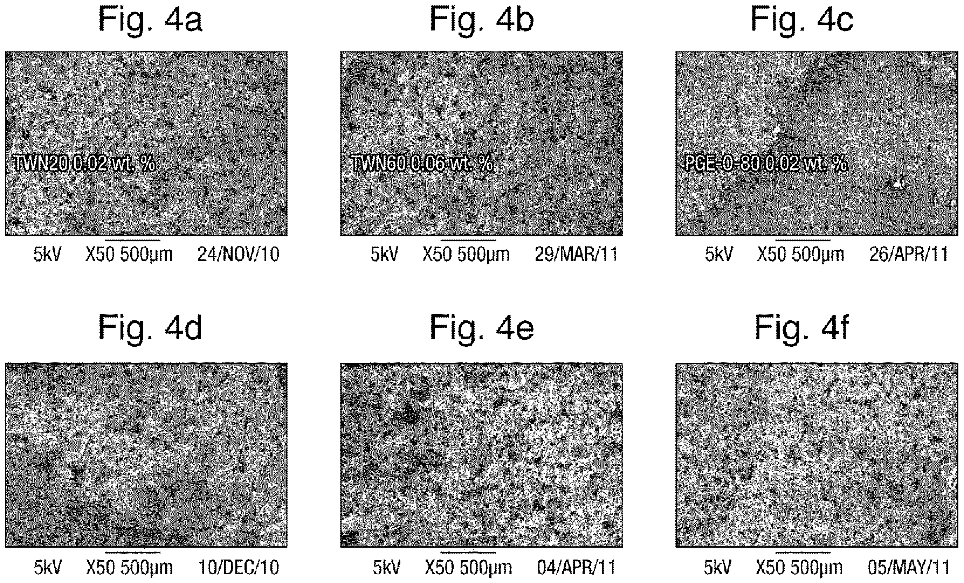

Figure 4 shows SEM images of inventive Co-surfactant examples; 0.02 wt. % Tween 20, 0.06 wt. % Tween 60, and 0.02 wt. % PGE-O-80. In this case, we unexpectedly observed that the microstructure of the temperature abused ice cream (Figure4d, e, f) samples has not degraded, in contrast to the case where the inventive Co-surfactant is not included (Example 2B and Examples in Figure 2e and in Figure 3d, e, f). The beneficial effect is attributed to the presence of the Co-surfactant used. In these cases the elasticity (Table 3) of model formulations reaches, within the measured time points, at least over 55% of the value for HFBII alone (measured at 3600s).

Example 5: Ice cream comprising hydrophobin and a Co-surfactant

Evaluation of the optimized level of Co-surfactant (Panodan) for aerated frozen products formulated at a 0.1 wt. % concentration HFBII and 11.3 wt. % SMP(Table 4) was carried out using the interfacial rheology technique on model formulations A, B, C and D (concentration reduced 200 times) shown in Table 5.

Table 4: Base Ice cream formulation

| Wt. % | |
|---|---|
| Ingredients | A |
| Sucrose | 11.5% |
| Maltodextrin 10 DE | 4.0% |
| SMP | 11.3% |
| Polydextrose | 5.25% |
| 36 DE Corn syrup solid | 5% |
| Coconut Oil | 0.15% |
| IcePro 2003 blend | 0.65% |
| Ice Structuring Protein | 0.0005% |
| Water | 66.1495 |
| post addition | |
| HFBII | 0.1% |
| Co-surfactant Panodan Visco Lo 2000 | To be optimized - see results summarised in Table 6. |

Table 5. Model interfacial rheology formulations used to determine optimum amount of Co-surfactant for use in the ice cream formulation stated in Table 4. Concentration for SMP (skim milk powder) is that stated for the total powder. The amount of protein in SMP was stated by the manufacturer as 35 wt. %.

| Wt. % | | | | |
|---|---|---|---|---|
| Ingredient | A (reference) | B (comparative) | C (comparative) | D (inventive) |
| HFBII | 0.0005% | 0.0005% | 0.0005% | 0.0005% |
| SMP | - | 0.0565% | 0.0565% | 0.0565% |
| IcePro 2003 | - | 0.00325% | 0.00325% | 0.00325% |

(continued)

| Wt. % | | | | |
|---|---|---|---|---|
| Ingredient | A (reference) | B (comparative) | C (comparative) | D (inventive) |
| Co-surfactant Panodan Visco Lo 2000 | - | - | 0.00005% | 0.0002% |

Results:

The results from the interfacial rheology experiments are summarised in Table 6. The data predict that the concentration of Panodan (CSF) to be ideally used in the ice cream example (Table 4) should be used in the ratio of 0.0005 wt. % HFBII : 0.0002 wt. % Panodan. The concentration used in the ice cream example was proposed as 0.1 wt. %. Therefore, the appropriate concentration of Panodan Co-surfactant should be preferably greater than 0.01% and preferably around 0.04 wt. %.

Table 6: Elastic modulus (mN/m) compared at defined time points for HFBII(0.0005 wt. %) + SMP(0.0565 wt. %) + IcePro 2003 (0.00325 wt. %) + either inventive Co-surfactant or a comparative surfactant (at indicated concentration). Parenthetical expression indicates percentage (%) of HFBII(0.0005 wt. %) elastic modulus (179.5 mN/m = 100%, average of 2 repetitions) measured at 3600s

| Inventive Co-surfactant or comparative surfactant | 1200s | 1800s | 2400s | 3600s | replicates | Notes |
|---|---|---|---|---|---|---|
| NONE (Comp.) | 28.2(15.7%) | 33.5(18.6%) | 36.3(20.2%) | *33.5 (18.6%) | 3 | *exp terminated at 3000s |
| Panodan Visco Lo 2000 (Comp.) (0.00005 wt. %) | 26.5(14.7%) | 31 (17.7%) | 33.3(18.5%) | 88.7(49.4%) | 1 | |
| Panodan Visco Lo 2000 (Inv.) (0.0002 wt. %) | 25.7(14.3%) | 56.5(31.4%) | 95.8(53.3%) | *148.7 (82.8%) | 1 | *exp terminated at 3300s |

Example 6: Use of a Co-surfactant with Class II hydrophobin HFBI and CU in the presence of milk protein

In the following section we show that the recovery of interfacial elastic modulus promoted by CSF is a common feature to different variants of class II hydrophobins. In this case, using either HFBI or CU, both of which are class II hydrophobins.

Surface dilational rheology experiments were carried out in the same manner as in the previous examples, except in these cases $\Delta A/A=2.5\%$.

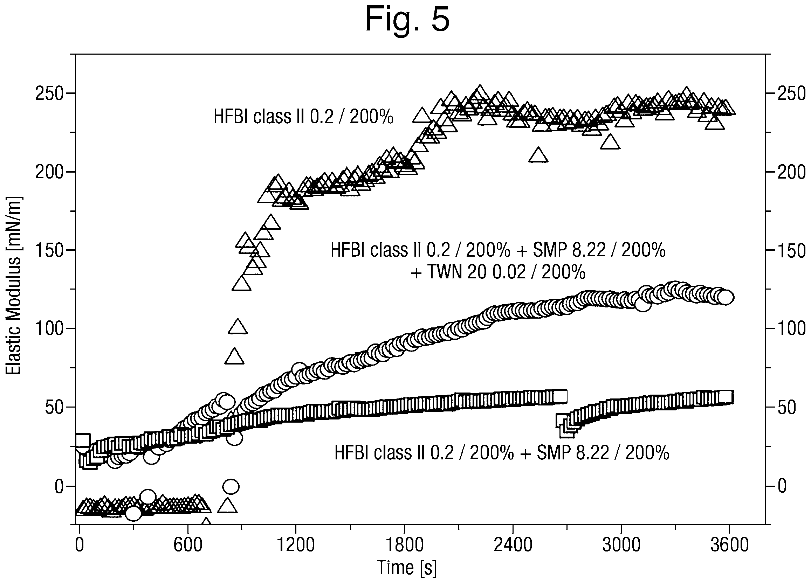

Figure 5 shows the elastic interfacial modulus for pure Class II hydrophobin HFBI in water (top, triangles) at a concentration of HFBI = 0.2/200 wt. %. The addition of SMP to such a solution at a concentration of 8.22/200 wt. % (bottom, squares) clearly reduces the elastic interfacial modulus of compared Class II hydrophobin HFBI alone. Addition of a CSF (middle, circles) to the SMP + Class II hydrophobin HFBI mix at a concentration of 0.02/200 wt. % promotes a recovery of the interfacial elasticity.

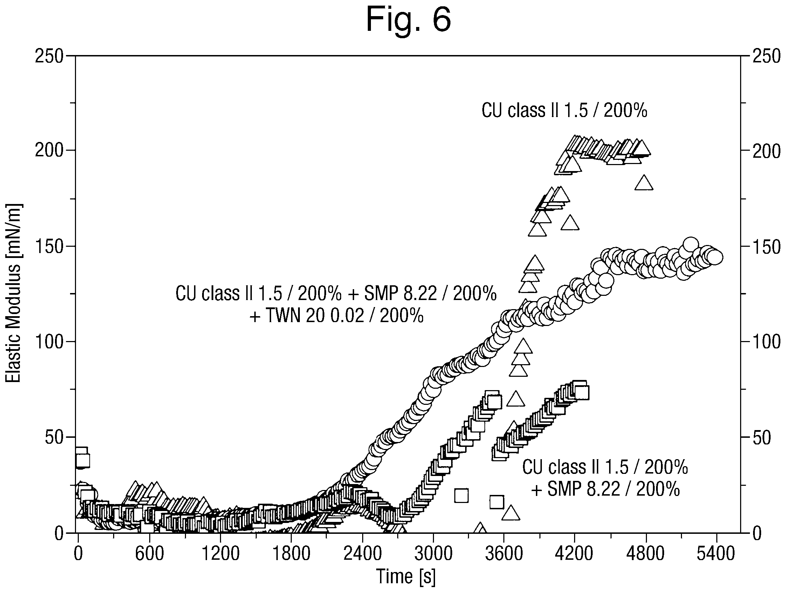

The same pattern is seen in Figure 6 for CU, the other class II hydrophobin, although CU is active (top, triangles) at a higher concentration (1.5/200 wt.%) than the other hydrophobins. The addition of SMP (8.22/200 wt.%) clearly reduces the elastic interfacial modulus (bottom, squares) in comparison to value measured for Class II hydrophobin CU alone (triangles). Addition of a CSF (middle, circles) to the SMP + Class II hydrophobin CU mix at a concentration of 0.02/200 wt. % promotes a recovery of the interfacial elasticity

These data demonstrate that the use of a Co-surfactant works with other class II hydrophobins.

Test Methods and Material Sources:

### 1. Dilatational Surface Rheology Measurements

*Materials*

Preparation of the solutions for the experimental work was done using the same ingredients as in the preparation of fully formulated ice creams except that tap water was used to prepare ice creams. All other solutions were prepared in de-ionised water (18.2 M$\Omega$ cm). Concentrations of ingredients are expressed as weight %.

Solutions were prepared using combinations of hydrophobin, Secondary protein e.g. a milk protein, and an added Co-surfactant.

In the interfacial rheology experiments the concentration of used ingredients was scaled down 200-times with respect to the levels used in ice cream manufacturing. The concentrations used for interfacial rheology experiments are (as an example and not restricted to these):

HFBII = 0.001 wt. % = 0.2/200 wt. %
SMP = 0.041 wt. % = 8.22/200 wt. %
CSF = 0.0001 wt. %=0.2/200 wt. %

### 2. Interfacial rheology method

Reported values of the viscoelastic modulus (E) were measured using the Drop Shape tensiometer PAT-1 (Sinterface, Germany). The measuring configuration is that of a bubble emerging from a J-shaped capillary positioned inside the cell containing the solution. The PAT-1 tensiometer implements a feature allowing for an accurate control of the bubble interfacial area with the possibility of varying it during the measurement according to predetermined patterns. This feature is utilised for the measurement of the dilational viscoelasticity. Purely harmonic oscillations of the bubble interfacial area with small amplitude and frequency are imposed (immediately after the bubble formation) while the surface tension response, $\gamma(t)$, is measured. From the amplitude of the two signals, A(t) and $\gamma(t)$, and the phase shift between them, the elastic and viscous components of E are calculated. Amplitude and phase of the measured A(t) and $\gamma(t)$ oscillatory signals are extracted by standard Fourier analysis techniques.

In the experiments reported here an air bubble of area $A_0$ = 18 mm$^2$ was formed at the tip of a J-shaped capillary in a glass cell containing about 27 ml of the solution. An area variation between 2.5 and 3.5% was imposed during oscillations at the frequency of 0.05 Hz and a temperature of 5°C, unless otherwise stated. A gentle nitrogen stream was directed onto the cell glass walls (front and back) to prevent air humidity condensation which obscures the cell field of view

### 3. Scanning Electron Microscopy (SEM) Method

The microstructure of each product was visualised using Low Temperature Scanning Electron Microscopy (LTSEM). The sample was cooled to -80 °C on dry ice and a sample section cut. This section, approximately 5mmx5mmx10mm in size, was mounted on a sample holder using a Tissue Tek : OCT ™ compound (PVA 11 wt. %, Carbowax 5 wt. % and 85 wt. % non-reactive components). The sample including the holder was plunged into liquid nitrogen slush and transferred to a low temperature preparation chamber: *Oxford Instrument CT1500HF.* The chamber is under vacuum, approximately 10$^{-4}$ bar, and the sample is warmed up to -90 °C. Ice is slowly etched to reveal surface details not caused by the ice itself, so water is removed at this temperature under constant vacuum for 60 to 90 seconds. Once etched, the sample is cooled to -110°C ending the sublimation, and coated with gold using argon plasma. This process also takes place under vacuum with an applied pressure of 10$^{-1}$ millibars and current of 6 milliamps for 45 *seconds.* The sample is then transferred to a conventional Scanning Electron Microscope (JSM 5600; JEOL LTD. Japan), fitted with an Oxford Instruments cold stage at a temperature of -160°C. The sample is examined and areas of interest captured via digital image acquisition software e.g. using the method described below.

### 4. Production of frozen aerated confections

Mix Preparation

Ice cream pre-mixes were prepared by adding the solid ingredients to hot water (>60°C) with stirring to disperse. The pre-mix was then heated to 80 °C with a plate heat exchanger, then homogenised at 140 bar pressure and pasteurised at 82°C for 25 seconds. The mix was then cooled via a plate heat exchanger to 5°C and held at this temperature (aging) for at least 2 hours before further processing. After the aging step and prior to the freezing process (below), concentrated hydrophobin solution and Co-surfactant was added to the mix with gentle stirring to disperse. When used in combination, concentrated hydrophobin solution was mixed with the Co-surfactant before adding to the mix.

Aerated Frozen Confection Production

After aging the mixes were processed using an WCB MF75 (for small scale) or Hoyer KF 1000 (for large scale) freezer. All aerated products were produced at 100% overrun and extruded ca. -6°C. Frozen products were collected in 500 mL waxed paper cartons and hardened in a blast freezer at -35 °C for 2 hours before storage at -25 °C.

Storage of Frozen Products

Products stored at -25°C are classed as "fresh" products since the microstructure is stable at this temperature and growth of bubbles and ice crystals will not be significant between the time of production and further analysis by SEM (< 1 month).

"Temperature abused" products were transferred to a freezer wherein the temperature fluctuates between -20°C and -10°C over 24 hours as follows: 11 hours 30 mins at -20°C followed by 30 mins at +10 °C, then 11 hours 30 mins at -10 °C followed by 30 mins at +10 °C. After 2 weeks abuse with daily temperature fluctuations as described above, the products were then transferred to a -25 °C freezer before further analysis.

5. Determination of bubble size distribution

The gas bubble size (diameter) distribution as used herein is defined as the size distribution obtained from the two dimensional representation of the three dimensional microstructure, as visualized in the SEM micrograph, determined using the following methodology.

Samples are imaged at 3 different magnifications (for reasons explained below), and the bubble size distribution of a sample is obtained from this set of micrographs in three steps:

1. Identification and sizing of the individual gas bubbles in the micrographs
2. Extraction of the size information from each micrograph
3. Combination of the data from the micrographs into a single size distribution

All of these steps, other than the initial identification of the gas bubbles, can conveniently be performed automatically on a computer, for example by using software such as MATLAB R2006a (MathWorks, Inc) software.

Identification and sizing of the individual gas bubbles in the micrographs

Firstly, a trained operator (i.e. one familiar with the microstructures of aerated systems) traces the outlines of the gas bubbles in the digital SEM images using a graphical user interface. The trained operator is able to distinguish gas bubbles from ice crystals (which are present in frozen aerated products and are the same order of magnitude in size) because the gas bubbles are approximately spherical objects of varying brightness / darkness whereas ice crystals are irregular-shaped objects of a uniform grey appearance.

Secondly, the size is calculated from the selected outline by measuring the maximum area as seen in the two dimensional cross-sectional view of the micrograph (A) as defined by the operator and multiplying this by a scaling factor defined by the microscope magnification. The bubble diameter is defined as the equivalent circular diameter $d$:

$$d = 2\sqrt{A/\pi}$$

This is an exact definition of the diameter of the two-dimensional cross-section through a perfect sphere. Since most of the gas bubbles are approximately spherical, this is a good measure of the size.

Extraction of the size information from each micrograph

Gas bubbles which touch the border of a micrograph are only partially visible. Since it is not therefore possible to determine their area, they must be excluded. However, in doing so, systematic errors are introduced: (i) the number of gas bubbles per unit area is underestimated; and (ii) large gas bubbles are rejected relatively more often since they are more likely to touch the border, thus skewing the size distribution. To avoid these errors, a guard frame is introduced (as described in John C. Russ, "The Image Processing Handbook", second edition, CRC Press, 1995). The guard frame concept uses a virtual border to define an inner zone inside the micrograph. The inner zone forms the measurement area from which unbiased size information is obtained, as illustrated in Figure 6 (a schematic depiction of a micrograph, in which gas bubbles that touch the outer border of the micrograph have been drawn in full, even though in reality only the part falling within the actual micrograph would be observed.)

Bubbles are classified into 5 classes depending on their size and position in the micrograph. Bubbles that fall fully within the inner zone (labelled class 1) are included. Bubbles that touch the border of the virtual micrograph (class 2) are also included (since it is only a virtual border, there is fact full knowledge of these bubbles). Bubbles that touch the actual micrograph border (class 3) and / or fall within the outer zone (class 4) are excluded. The exclusion of the class 3 bubbles introduces a bias, but this is compensated for by including the bubbles in class 2, resulting in an unbiased estimate of the size distribution. Very large bubbles, i.e. those larger than the width of the outer zone (class 5), can straddle both the virtual (inner) border and the actual outer border and must therefore be excluded, again introducing bias. However, this bias only exists for bubbles that are wider than the outer zone, so it can be avoided by excluding all bubbles of at least this size (regardless of whether or not they cross the actual border). This effectively sets an upper limit to the gas bubble size that can be reliably measured in a particular micrograph. The width of the inner zone is chosen to be 10% of the vertical height of the micrograph as a trade-off between the largest bubble that can be sized (at the resolution of the particular micrograph) and the image area that is effectively thrown away (the outer zone).

There is also minimum size limit (at the resolution of the micrograph) below which the operator cannot reliably trace round gas bubbles. Therefore bubbles that are smaller than a diameter of 20 pixels are also ignored.

Combination of the data from the micrographs into a single size distribution

As explained above, it is necessary to introduce maximum and minimum cut-off bubbles sizes. In order that these minimum and maximum sizes are sufficiently small and large respectively so as not to exclude a significant number of bubbles, some samples may need to be imaged at 3 different magnifications: e.g. 100x, 300x and 1000x. This occurs if there is a wide distribution in bubble sizes, and the skilled user can determine what magnifications are appropriate in order to capture the full size distribution: one magnification or more. As an example for the case of 3 different magnifications, each magnification yields size information in a different range, given in Table 7.

Table 7

| Magnification | Minimum bubble size | Maximum bubble size |
|---------------|---------------------|---------------------|
| 100x | 20 $\mu$m | 83 $\mu$m |
| 300x | 6.6 $\mu$m | 28 $\mu$m |
| 1000x | 2.0 $\mu$m | 8.3 $\mu$m |

Thus bubbles as small as 2• m and as large as 83• m are counted. Visual inspection of the micrographs at high and low magnifications respectively confirmed that essentially all of the bubbles fell within this size range. The magnifications are chosen so that there is overlap between the size ranges of the different magnifications (e.g. gas bubbles with a size of 20-28 • m are covered by both the 100x and 300x micrographs) to ensure that there are no gaps between the size ranges. In order to obtain robust data, at least 500 bubbles are sized; this can typically be achieved by analysing one micrograph at 100x, one or two at x300 and two to four at x1000 for each sample.

The size information from the micrographs at different magnifications is finally combined into a single size distribution histogram. Bubbles with a diameter between 20 $\mu$m and 28 $\mu$m are obtained from both the 100x and 300x micrographs, whereas the bubbles with a diameter greater than 28 $\mu$m are extracted only from the 100x micrographs. Double counting of bubbles in the overlapping size ranges is avoided by taking account of the total area that was used to obtain the size information in each of the size ranges (which depends on the magnification), i.e. it is the number of bubbles of a certain size per unit area that is counted. This is expressed mathematically, using the following parameters:

$N$ = total number of gas cells obtained in the micrographs
$d_k$ = the $k^{th}$ outlined gas cell with $k \in [1, N]$
$A_i$ = the area of the inner zone in the $i^{th}$ micrograph
$R_i$ = the range of diameters covered by the $i^{th}$ micrograph (e.g. [20$\mu$m,83$\mu$m])
$B(j)$ = the j$^{th}$ bin covering the diameter range : [$jW$,($j$+1)$W$)

The total area, $S(d)$, used to count gas bubbles with diameter $d$ is given by adding the areas of the inner zones

(A$_i$) in the micrographs for which $d$ is within their size range (R$_i$).

$$S(d) = \sum_{i\,|\,d \in R_i} A_i$$

The final size distribution is obtained by constructing a histogram consisting of bins of width $W$• m. B(j) is the number of bubbles per unit area in the j$^{th}$ bin (i.e. in the diameter range j x W to (j+1) x W). B(j) is obtained by adding up all the individual contributions of the gas bubbles with a diameter in the diameter range j x W to (j+1) x W, with the appropriate weight, i.e. 1/$S(d)$.

$$B(j) = \sum_{k \in D} 1/S(d_k)$$

where

$$D_j = \{k \,|\, d_k \in [\,jW, (j+1)W)\}$$

Magnifications used are chosen by the skilled user in order to extract bubble size through the analysis software.

The bubble size distributions are conveniently described in terms of the normalised cumulative frequency, i.e. the total number of bubbles with diameter up to a given size, expressed as a percentage of the total number of bubbles measured.

Alternative expressions of bubble size distribution can also be used, e.g. d3,2.

6. Material Sources

| Ingredient | Source | Notes |
|---|---|---|
| Hydrophobin, HFBII | Du Pont | Class II hydrophobin |
| Hydrophobin, HFBI | VTT, Finland | Class II hydrophobin |
| Hydrophobin, Cerato Ulmin | Unilever R&D Vlaardingen | Class II hydrophobin |
| Skim Milk Protein (SMP) | Dairy Crest | 35 wt. % protein content |
| Panodan Visco Lo 2000 | Danisco, Denmark | A diacetyl tartaric acid ester of mono-diglycerides; Sapnoification value 435-465; Acid value 50-70; Iodine value ~ 75. |
| PGE-O-80/D | Danisco, Denmark | A polyglycerol ester; polyglycerol moiety is mainly di-, tri-, and tetraglycerol; Iodine value ~ 55; |
| | | Saponification value 115-135. |
| Sucrose ester SE1670 | Ryoto Sucrose Esters-(Mitsubishi-Kagaku Foods) | |
| Sucrose ester SP70 | Ryoto Sucrose Esters-(Mitsubishi-Kagaku Foods) | |
| PGE55 | Danisco, Denmark | A polyglycerol ester; polyglycerol moiety is mainly di-, tri-, and tetraglycerol; Iodine level max. 2; Saponification value 130-145. |

(continued)

| Ingredient | Source | Notes |
|---|---|---|
| Hygel | Kerry Foods | Hydrolysed milk protein |
| Ice Structuring Protein (ISPIII) | Martek | |
| IcePro | Danisco | |

**Claims**

1. A frozen aerated food composition comprising:

   a. at least 0.01 wt. % of total hydrophobin(s) selected from the group consisting of class I hydrophobin(s), class II hydrophobin(s) or blends thereof added in isolated form to the food composition;
   b. one or more Co-surfactants in the total concentration range of 0.001 to less than 0.3 wt. %;
   wherein the one or more Co-surfactants are ingredients which, when mixed in an aqueous solution containing 0.001 wt. % hydrophobin and between 0.0015 and 0.2 wt. % of at least one non-hydrophobin (Secondary) protein at a concentration effective to confer an air/water surface dilatational elasticity that is at least 30% of that of 0.001 wt. % pure hydrophobin (absent the Co-surfactant), measured between 600 and 4000s at 5°C for an air droplet in water subject to a continuous area change of between 2.5 and 3.5% oscillated at a frequency of 0.05 Hz, using the procedure as described in here; and
   c. one or more Secondary protein(s) that are different from hydrophobin(s);
   wherein said Secondary protein(s) are present in a total concentration range of 0.25 to less than 6.0 wt. %;
   wherein the one or more Secondary protein(s) are defined as non-hydrophobin proteins that when mixed with 0.001 wt. % hydrophobin in aqueous solution at a concentration of 0.04 wt. % results in an air/water surface dilatational elasticity that is at least 35% less than that of hydrophobin alone, where the dilatational measurement is made between 600 and 4000s at 5°C for an air droplet in water subject to a continuous area change of between 2.5 and 3.5% oscillated at a frequency of 0.05Hz, using the procedure as described in here; and

   wherein the weight ratio of Co-surfactants to total hydrophobin(s) is in the range of 0.02 to less than 1.0.

2. The product of claim 1 wherein the hydrophobins are class II hydrophobin(s) selected from the group consisting of HFBII, HFBI or Cerato Ulmin or blends thereof.

3. The product of claim 1 wherein the total hydrophobin(s) concentration is at most 1.5 wt. %.

4. The product of claim 1 wherein the Co-surfactants is or are water soluble non-ionic surfactant(s).

5. The product of claim 1 wherein the Co-surfactant(s) are selected from Polysorbates; polyglycerol esters of alkyl or alkenyl fatty acids, diacetyl tartartic acid esters of mono-/di- glycerides, sucrose esters with an HLB > 8 or blends thereof.

6. The product of claim 1 wherein the Co-surfactant(s) has a minimum effective HLB value of 8.

7. The product of claim 1, wherein the Co-surfactant(s) is chosen as one of more of Polysorbates, Polyglycerol esters of fatty acids, Diacetyl tartartic acid esters of mono-/di- glycerides, and Sucrose esters of H LB > 8 or 12.

8. The product of claim 1 wherein the Co-surfactant(s) is selected from Tweens 20, 60 or 80, PGE-O-80; and blends thereof.

9. The product of claim 1 wherein the average bubble diameter (d3,2) is at least 10 % smaller after the standard temperature abuse protocol than the same product prepared the same way but absent either hydrophobin(s), Co-surfactant(s) or if both are present then outside the total Co-surfactant(s) to hydrophobin(s) ratio range of 0.02 to less than 1.0.

10. The process of making an aerated food composition comprising the steps of:

a. Blending the food composition ingredients together, mixing, and pasteurising, wherein the blend comprises secondary protein(s) in a total concentration range of 0.25 to less than 6.0 wt. %, based on the frozen product; and wherein the one or more Secondary protein(s) are defined as non-hydrophobin proteins that when mixed with 0.001 wt. % hydrophobin in aqueous solution at a concentration of 0.04 wt. % results in an air/water surface dilatational elasticity that is at least 35% less than that of hydrophobin alone, where the dilatational measurement is made between 600 and 4000s at 5°C for an air droplet in water subject to a continuous area change of between 2.5 and 3.5% oscillated at a frequency of 0.05Hz, using the procedure as described in here;
b. Adding at least 0.01 wt. % of total hydrophobin(s) selected from the group consisting of class I hydrophobin(s), class II hydrophobin(s) or blends thereof and
a Co-surfactant or Co-surfactants in the total concentration range of 0.001 to less than 0.3 wt. %
to the chilled mix of step (a);
wherein the one or more Co-surfactants are ingredients which, when mixed in an aqueous solution containing 0.001 wt. % hydrophobin and between 0.0015 and 0.2 wt. % of at least one non-hydrophobin (Secondary) protein at a concentration effective to confer an air/water surface dilatational elasticity that is at least 30% of that of 0.001 wt. % pure hydrophobin (absent the Co-surfactant), measured between 600 and 4000s at 5°C for an air droplet in water subject to a continuous area change of between 2.5 and 3.5% oscillated at a frequency of 0.05 Hz, using the procedure as described in here;
c. Aerating and freezing the mix of step (b) to produce the aerated and frozen product; and
d. Cooling the frozen product to a storage temperature of less than -15°C; and

wherein the weight ratio of Co-surfactants to total hydrophobin(s) is in the range of 0.02 to less than 1.0.

11. The process of claim 10 further comprising the step of extruding the frozen product from a freezer at a temperature of -5°C or less.

**Patentansprüche**

1. Gefrorene, belüftete Lebensmittelzusammensetzung, umfassend:

a) mindestens 0,01 Gew.-% an Gesamthydrophobin(en), ausgewählt aus der Gruppe bestehend aus Klasse I-Hydrophobin(en), Klasse II-Hydrophobin(en) oder Mischungen davon, der Lebensmittelzusammensetzung in isolierter Form zugegeben;
b) ein oder mehrere Co-Tenside in dem Gesamtkonzentrationsbereich von 0,001 bis weniger als 0,3 Gew.-%;
wobei die ein oder mehreren Co-Tenside Zutaten sind, welche, wenn sie in eine wässrige Lösung, enthaltend 0,001 Gew.-% Hydrophobin und zwischen 0,0015 und 0,2 Gew.-% mindestens eines Nicht-Hydrophobin-(sekundären)-Proteins, in einer Konzentration gemischt werden, die effektiv ist, um einer Luft/Wasseroberfläche dilatatorische Elastizität zu verleihen, die mindestens 30 % von der von 0,001 Gew.-% reinen Hydrophobins ist (ohne das Co-Tensid), gemessen zwischen 600 und 4000s bei 5°C an einem Luftbläschen in Wasser, das einer kontinuierlichen Flächenänderung zwischen 2,5 und 3,5 %, oszillierend mit einer Frequenz von 0,05 Hz, unterliegt, unter Anwendung der hierin beschriebenen Vorgehensweise; und
c) ein oder mehrere sekundäre(s) Protein(e), das/die von Hydrophobin(en) verschieden sind;
wobei besagte(s) sekundäre(s) Protein(e) in einem Gesamtkonzentrationsbereich von 0,25 bis weniger als 6,0 Gew.-% vorhanden sind;
wobei das eine oder die mehreren sekundäre(n) Protein(e) als Nicht-Hydrophobin-Proteine definiert sind, die, wenn sie mit 0,001 Gew.-% Hydrophobin in wässriger Lösung bei einer Konzentration von 0,04 Gew.-% gemischt werden, eine dilatatorische Elastizität der Luft/Wasseroberfläche ergeben, die mindestens 35 % geringer ist als die mit Hydrophobin allein, wobei die dilatatorische Messung zwischen 600 und 4000s bei 5°C an einem Luftbläschen in Wasser erfolgt, das Gegenstand einer kontinuierlichen Flächenänderung zwischen 2,5 und 3,5 %, oszillierend mit einer Frequenz von 0,05 Hz, ist, unter Anwendung der hierin beschriebenen Vorgehensweise; und

wobei das Gewichtsverhältnis des Co-Tensids zu Gesamthydrophobin(en) in dem Bereich von 0,02 bis kleiner als 1,0 ist.

2. Produkt nach Anspruch 1, wobei die Hydrophobine Klasse II-Hydrophobin(e) sind, ausgewählt aus der Gruppe bestehend aus HFBII, HFBI oder Cerato Ulmin oder Mischungen davon.

3. Produkt nach Anspruch 1, wobei die Konzentration an Gesamthydrophobin(en) höchstens 1,5 Gew.-% ist.

4. Produkt nach Anspruch 1, wobei das/die Co-Tensid(e) wasserlösliche(s) nichtionische(s) Tensid(e) ist oder sind.

5. Produkt nach Anspruch 1, wobei das/die Co-Tensid(e) aus Polysorbaten, Polyglycerinestern von Alkyl- oder Alkenylfettsäuren, Diacetylweinsäureestern von Mono-/Diglyceriden und Estern der Sucrose mit einem HLB > 8 oder Mischungen davon ausgewählt sind.

6. Produkt nach Anspruch 1, wobei das/die Co-Tensid(e) einen minimalen effektiven HLB-Wert von 8 hat.

7. Produkt nach Anspruch 1, wobei das/die Co-Tensid(e) als eines von mehreren aus Polysorbaten, Polyglycerinestern von Fettsäuren, Diacetylweinsäureestern von Mono-/Diglyceriden und Estern der Sucrose mit HLB > 8 oder 12 ausgewählt ist.

8. Produkt nach Anspruch 1, wobei die/das Co-Tensid(e) aus Tween 20, 60, 80 oder PGE-O-80 und Mischungen davon ausgewählt ist.

9. Produkt nach Anspruch 1, wobei der durchschnittliche Blasendurchmesser (d3,2) nach der Standard - Temperatur Abuse-Protokoll mindestens 10 % kleiner ist als im gleichen Produkt, hergestellt auf dieselbe Weise, aber ohne entweder Hydrophobin(e) oder Co-Tensid(e) oder falls beide vorhanden sind, dann außerhalb des Verhältnisbereiches Gesamt-Co-Tensid(e) zu Hydrophobin(e) von 0,02 bis zu weniger als 1,0.

10. Verfahren zur Herstellung einer belüfteten Lebensmittelzusammensetzung, umfassend die Schritte:

   a) Zusammenmischen der Zutaten der Lebensmittelzusammensetzung, Mischen und Pasteurisieren, wobei die Mischung sekundäre(s) Protein(e) in einem Gesamtkonzentrationsbereich von 0,25 bis weniger als 6,0 Gew.-%, bezogen auf das gefrorene Produkt, umfasst; und wobei das eine oder die mehreren sekundäre(n) Protein(e) als Nicht-Hydrophobin-Proteine definiert sind, welche, wenn sie mit 0,001 Gew.-% Hydrophobin in wässriger Lösung in einer Konzentration von 0,04 Gew.-% gemischt werden, an einer Luft/Wasseroberfläche eine dilatatorische Elastizität ergeben, die mindestens 35 % geringer ist als die von Hydrophobin allein, wobei die dilatatorische Messung zwischen 600 und 4000s bei 5°C an einem Luftbläschen in Wasser durchgeführt wird, das einer kontinuierlichen Flächenänderung zwischen 2,5 und 3,5 %, oszillierend mit einer Frequenz von 0,05 Hz, unterliegt, unter Anwendung der hierin beschriebenen Vorgehensweise; und
   b) Zugeben von mindestens 0,01 Gew.-% an Gesamthydrophobin(en), ausgewählt aus der Gruppe bestehend aus Klasse-I-Hydrophobin(en), Klasse-II-Hydrophobin(en) oder Mischungen davon,
   und
   eines Co-Tensids oder von Co-Tensiden in dem Gesamtkonzentrationsbereich von 0,001 bis weniger als 0,3 Gew.-%
   zu der gekühlten Mischung von Schritt (a);
   wobei die ein oder mehreren Co-Tenside Zutaten sind, welche, wenn sie in eine wässrige Lösung, enthaltend 0,001 Gew.-% Hydrophobin und zwischen 0,0015 und 0,2 Gew.-% mindestens eines Nicht-Hydrophobin-(sekundären)-Proteins, in einer Konzentration gemischt werden, die effektiv ist, um einer Luft/Wasseroberfläche dilatatorische Elastizität zu verleihen, die mindestens 30 % von der von 0,001 Gew.-% reinem Hydrophobin ist (ohne das Co-Tensid), gemessen zwischen 600 und 4000s bei 5°C an einem Luftbläschen in Wasser, das einer kontinuierlichen Flächenänderung zwischen 2,5 und 3,5 %, oszillierend mit einer Frequenz von 0,05 Hz, unterliegt, unter Anwendung der hierin beschriebenen Vorgehensweise;
   c) Belüften und Einfrieren der Mischung von Schritt (b), um das belüftete und gefrorene Produkt herzustellen; und
   d) Kühlen des gefrorenen Produktes auf eine Lagertemperatur von weniger als -15°C; und wobei das Gewichtsverhältnis des Co-Tensids zu Gesamthydrophobin(en) in dem Bereich von 0,02 bis kleiner als 1,0 liegt.

11. Verfahren nach Anspruch 10, ferner umfassend den Schritt des Extrudierens des gefrorenen Produktes aus einer Eiserzeugungsanlage bei einer Temperatur von -5°C oder weniger.

**Revendications**

1. Composition alimentaire aérée glacée comprenant :

   a. au moins 0,01 % en masse d'hydrophobine(s) totale(s) choisie(s) dans le groupe constitué d'hydrophobine(s) de classe I, d'hydrophobine(s) de classe II ou de combinaisons de celles-ci ajoutées dans une forme isolée à la composition alimentaire ;
   b. un ou plusieurs co-tensioactifs dans l'intervalle de concentration totale de 0,001 à moins de 0,3 % en masse ;
   dans laquelle les un ou plusieurs co-tensioactifs sont des ingrédients qui, lorsqu'ils sont mélangés dans une solution aqueuse contenant 0,001 % en masse d'hydrophobine et de 0,0015 à 0,2 % en masse d'au moins une protéine de non-hydrophobine (secondaire) à une concentration efficace pour conférer une élasticité de dilatation de surface air/eau qui est au moins 30 % celle de 0,001 % en masse d'hydrophobine pure (en l'absence de co-tensioactif), mesurée entre 600 et 4 000 s à 5°C pour une gouttelette d'air dans de l'eau soumise à une modification de surface continue de 2,5 à 3,5 % oscillant à une fréquence de 0,05 Hz, en utilisant la procédure comme décrit ici ; et
   c. une ou plusieurs protéine(s) secondaire(s) qui sont différentes de la(des) hydrophobine(s) ;
   dans laquelle la(les)dite(s) protéine(s) secondaire(s) est(sont) présente(s) dans un intervalle de concentration totale de 0,25 à moins de 6,0 % en masse ;
   dans laquelle les une ou plusieurs protéine(s) secondaire(s) sont définies comme des protéines de non-hydrophobines qui lorsqu'elles sont mélangées avec 0,001 % en masse d'hydrophobine dans une solution aqueuse à une concentration de 0,04 % en masse résultent en une élasticité de dilatation de surface air/eau qui est au moins 35 % inférieure à celle de l'hydrophobine seule, où la mesure de dilation est faite entre 600 et 4 000 secondes à 5°C pour une gouttelette d'air dans de l'eau soumise à une modification de surface continue de 2,5 à 3,5 % oscillant à une fréquence de 0,05 Hz, en utilisant la procédure comme décrite ici ; et
   dans laquelle le rapport massique de co-tensioactifs à hydrophobine(s) totale(s) se trouve dans l'intervalle de 0,02 à moins de 1,0.

2. Produit selon la revendication 1, dans lequel les hydrophobines sont une(des) hydrophobines(s) de classe II choisie(s) dans le groupe constitué de HFBII, HFBI ou Cerato Ulmin ou des combinaisons de ceux-ci.

3. Produit selon la revendication 1, dans lequel la concentration en hydrophobine(s) totale(s) est d'au plus 1,5 % en masse.

4. Produit selon la revendication 1, dans lequel les co-tensioactifs est ou sont des tensioactif(s) non-ionique(s) soluble(s) dans l'eau.

5. Produit selon la revendication 1, dans lequel le(les) co-tensioactif(s) est(sont) choisi(s) parmi des polysorbates ; des esters de polyglycérol d'acides gras alkyliques ou alcényliques, des esters d'acide diacétyltartrique de mono-/di-glycérides, des esters de saccharose avec un HLB > 8 ou des combinaisons de ceux-ci.

6. Produit selon la revendication 1, dans lequel le(les) co-tensioactif (s) présente(nt) une valeur HLB efficace minimale de 8.

7. Produit selon la revendication 1, dans lequel le(les) co-tensioactif(s) est(sont) choisi(s) comme un ou plusieurs parmi des polysorbates, des esters de polyglycérol d'acides gras, des esters d'acide diacétyltartrique de mono-/di-glycérides, et des esters de saccharose de HLB>8 ou 12.

8. Produit selon la revendication 1, dans lequel le(les) co-tensioactif(s) est(sont) choisi(s) parmi Tweens 20, 60 ou 80, PGE-O-80 ; et des combinaisons de ceux-ci.

9. Produit selon la revendication 1, dans lequel le diamètre moyen de bulle (d3,2) est au moins 10 % inférieur après le protocole d'excès de température standard que le même produit préparé de la même manière mais soit en l'absence d'hydrophobine(s), co-tensioactif(s) soit si les deux sont présents alors à l'extérieur de l'intervalle du rapport de co-tensioactif(s) à hydrophobine(s) totale(s) de 0,02 à moins de 1.0.

10. Procédé de fabrication d'une composition alimentaire aérée comprenant les étapes de :

    a. combinaison des ingrédients de composition alimentaire ensemble, mélange, et pasteurisation, dans lequel la combinaison comprend une(des) protéine(s) secondaire(s) dans un intervalle de concentration totale de 0,25 à moins de 6,0 % en masse, sur la base du produit glacé ; et dans lequel les une ou plusieurs protéine(s) secondaire(s) est(sont) définie(s) comme des protéines de non-hydrophobines qui lorsqu'elles sont mélangées avec 0.001 % en masse d'hydrophobine dans une solution aqueuse à une concentration de 0,04 % en masse résultent en une élasticité de dilatation de surface air/eau qui est au moins 35 % inférieure à celle de l'hydrophobine seule, où la mesure de dilatation est réalisée entre 600 et 4 000 s à 5°C pour une gouttelette d'air dans de l'eau soumise à une modification de surface continue de 2,5 à 3,5 % oscillant à une fréquence de 0,05 Hz, en utilisant la procédure comme décrit ici ;

b. addition d'au moins 0,01 % en masse d'hydrophobine(s) totale(s) choisie(s) dans le groupe constitué d'hydrophobine(s) de classe I, d'hydrophobine(s) de classe II ou de combinaisons de celles-ci et

un co-tensioactif ou des co-tensioactifs dans l'intervalle de concentration totale de 0,001 à moins de 0,3 % en masse

au mélange refroidi de l'étape (a) ;

dans lequel le un ou plusieurs co-tensioactifs sont des ingrédients qui, lorsqu'ils sont mélangés dans une solution aqueuse contenant 0,001 % en masse d'hydrophobine et de 0,0015 à 0,2 % en masse d'au moins une protéine de non-hydrophobine (secondaire) à une concentration efficace pour conférer une élasticité de dilatation de surface air/eau qui est au moins 30 % celle de 0,001 % en masse d'hydrophobine pure (en l'absence du co-tensioactif), mesurée entre 600 et 4 000 s à 5°C pour une gouttelette d'air dans de l'eau soumise à une modification de surface continue de 2,5 à 3,5 % oscillant à une fréquence de 0,05 Hz, en utilisant la procédure comme décrit ici ;

c. aération et congélation du mélange de l'étape (b) pour produire le produit aéré et glacé ; et

d. refroidissement du produit glacé à une température de stockage inférieure -15°C ; et

dans lequel le rapport massique de co-tensioactifs à hydrophobine(s) totale(s) se trouve dans l'intervalle de 0,02 à moins de 1,0.

11. Procédé selon la revendication 10 comprenant de plus l'étape d'extrusion du produit glacé à partir d'un congélateur à une température de -5°C ou inférieure.

# Fig. 1

Fig. 2a, Fig. 2b, Fig. 2c, Fig. 2d, Fig. 2e, Fig. 2f

Fig. 3a  Fig. 3b  Fig. 3c  Fig. 3d  Fig. 3e  Fig. 3f

## Fig. 4a

TWN20 0.02 wt. %

5kV    X50 500μm    24/NOV/10

## Fig. 4b

TWN60 0.06 wt. %

5kV    X50 500μm    29/MAR/11

## Fig. 4c

PGE-0-80 0.02 wt. %

5kV    X50 500μm    26/APR/11

## Fig. 4d

5kV    X50 500μm    10/DEC/10

## Fig. 4e

5kV    X50 500μm    04/APR/11

## Fig. 4f

5kV    X50 500μm    05/MAY/11

EP 2 884 850 B1

Fig. 5

EP 2 884 850 B1

Fig. 6

Fig. 7

Class 1, Included

Class 2, Included

Class 3, Excluded

Class 4, Excluded

Class 5, Excluded

Inner Zone

Outer Zone

EP 2 884 850 B1

**EP 2 884 850 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006024417 A, Berry
- US 2008213453 A, Burmester
- EP 1800543 A1
- WO 2009065415 A1
- EP 1938697 A1
- WO 0174864 A
- WO 9641882 A
- WO 0157076 A

### Non-patent literature cited in the description

- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; AN ALFEN.** *App. Environ. Microbiol.,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **R. MILLER ; L. LIGGIERI.** *Interfacial Rheology, Brill, Leiden,* 2009, vol. 138
- **W. KLOEK ; T. VAN VLIET ; M. MEINDERS.** *J Colloi Interf Sci,* 2001, vol. 237, 158
- **JOHN C. RUSS.** The Image Processing Handbook. CRC Press, 1995